# EUROPÄISCHE PATENTSCHRIFT

(11) **EP 2 557 114 B1**
(45) Veröffentlichungstag und Bekanntmachung des Hinweises auf die Patenterteilung: **18.05.2016**
(21) Anmeldenummer: 12172097.3
(22) Anmeldetag: 15.06.2012
(51) Int. Cl.: C08K 5/00, C08K 5/41

(54) **Kautschukmischung**
Rubber compound
Mélange de caoutchouc

(30) Priorität: 11.08.2011 DE 102011052606
(43) Veröffentlichungstag der Anmeldung: 13.02.2013
(73) Patentinhaber: Continental Reifen Deutschland GmbH, 30165 Hannover (DE)
(72) Erfinder: Weinreich, Hajo, Dr., 31552 Apelern (DE); Dumke, Joachim, Dr., 31275 Lehrte (DE)
(74) Vertreter: Preusser, Andrea

(56) Entgegenhaltungen:
- EP-A1- 1 810 847
- WO-A1-2011/078859
- DE-T5-112008 003 328
- DATABASE WPI Week 200934 Thomson Scientific, London, GB; AN 2009-H78023 XP002688360, -& WO 2009/054277 A1 (BRIDGESTONE CORP) 30. April 2009 (2009-04-30)

## Beschreibung

Die Erfindung betrifft eine Kautschukmischung, insbesondere für Fahrzeugluftreifen, Gurte, Riemen und Schläuche.

Die Kautschukzusammensetzung des Laufstreifens bestimmt in hohem Maße die Fahreigenschaften eines Reifens, insbesondere eines Fahrzeugluftreifens. Ebenso sind die Kautschukmischungen, die in Riemen, Schläuchen und Gurten Verwendung vor allem in den mechanisch stark belasteten Stellen finden, für Stabilität und Langlebigkeit dieser Gummiartikel im Wesentlichen verantwortlich. Daher werden an diese Kautschukmischungen für Fahrzeugluftreifen, Gurte, Riemen und Schläuche sehr hohe Anforderungen gestellt.
Insbesondere bei Hochgeschwindigkeitsreifen (engl Ultra High Performance-Reifen, abgekürzt UHP-Reifen) liegt der Fokus auf den Reifeneigenschaften Nass- und Trockengriff in Kombination mit Handling. Durch verschiedene Materialmaßnahmen hinsichtlich der Zusammensetzung der Kautschukmischung können diese Eigenschaften gezielt optimiert werden, beispielsweise durch Erhöhung des Füllgrades oder der Erhöhung der Glasübergangstemperatur der Kautschukmischung insbesondere für den Laufstreifen. So wird bspw. in DE11 2008 003 328 T5 eine Kautschukmischung für eine Seitenwand, für einen Abriebstreifen und/ oder für eine Isolierung beschrieben, die einen besseren Rollwiderstand und eine bessere Steuerungsstabilität (Handling) aufweist. Hierzu wird in der dort beschriebenen Kautschukmischung eine Kombination aus 20 bis 60 phr Füllstoff, 1 bis 4 phr Schwefel und 0,1 bis 10 phr einer Vulkanisationsbeschleunigerhilfe eingesetzt. Insbesondere bei UHP-Reifen liegt einer der Hauptaugenmerke auf der Handlingstabilität bei hohen Temperaturen, wie sie zum Beispiel bei Rennstreckeneinsätzen auftreten. Des Weiteren nimmt zunehmend das Rollwiderstandsverhalten von UHP-Reifen eine wichtige Rolle ein. Dies liegt zum Einen in der Europäischen Union an dem dort diskutierten und in Kürze anstehenden EU-Reifenlabel und zum Anderen dient der Rollwiderstandswert als Kenngröße für den internen Wärmeaufbau des Reifens. Je geringer der interne Wärmeaufbau, desto leichter können solche Reifen verschiedene gesetzlich vorgeschriebene Prüfungen für den Hochgeschwindigkeits-Index bestehen. Der Wärmeaufbau war bisher insbesondere für Schwerlastreifen, wie sie z.Bsp. in EP 1 810 847 A1 ("Heavy duty truck tires") beschrieben werden, zur Optimierung der Langzeithitzebeständigkeit relevant.
Verbesserte Handlingstabilität und optimiertes Rollwiderstandsverhalten bedingen allerdings eine Verschlechterung des Abriebwiderstandes, was insbesondere aus ökologischen Gesichtspunkten nachteilig ist und auch zu einem deutlich schnelleren Verschleiß des Reifens führt. Des Weiteren hat ein schlechter Abriebwiderstand häufig eine verschlechterte Rennstreckenperformance zur Folge. Dies betrifft insbesondere die Griffigkeit (engl. Grip) nach längerer Laufzeit, beispielsweise im letzten Drittel eines Renneinsatzes. Ein erhöhter Materialverlust im Laufstreifenbereich führt hierbei zu einer Verringerung der Hystereseeigenschaften des Reifens und damit zwangsläufig zu verringertem Grip und schlechteren Rundenzeiten.

Die Aufgabe der vorliegenden Erfindung ist es daher, eine Kautschukmischung, insbesondere für Fahrzeugluftreifen, Gurte und Riemen, bereitzustellen, die sich durch ein verbessertes Rollwiderstandsverhalten, hohe Handlingstabilität und optimiertes Abriebverhalten auszeichnen. Vorzugsweise verbleiben dabei die weiteren physikalischen Eigenschaften auf einem ähnlichen Niveau.

Gelöst wird diese Aufgabe durch eine Kautschukmischung mit folgender Zusammensetzung:
- 80 bis 100 phr wenigstens eines Kautschuks, welcher ausgewählt ist aus der Gruppe bestehend aus natürlichem Polyisopren (NR), synthetischem Polyisopren (IR), Polybutadienkautschuk (BR), Styrolbutadienkautschuk (SBR), lösungspolymerisierter Styrolbutadienkautschuk (SSBR) und emulsionspolymerisierter Styrolbutadienkautschuk (ESBR) und
- 50 bis 250 phr zumindest einer Kieselsäure und
- 0,1 bis 40 phr zumindest eines Mercaptosilans und
- 0,1 bis 10 phr 1,6-Bis(hexamethylenthiosulfat)dinatrium-dihydrat und
- weitere Zusatzstoffe.

Überraschenderweise wurde gefunden, dass die Kombination aus wenigstens einem Mercaptosilan und 1,6-Bis(hexamethylenthiosulfat)dinatrium-dihydrat deutliche Vorteile hinsichtlich des Abriebverhaltens zeigt. Gleichzeitig werden das Rollwiderstandsverhalten und die Handlingstabilität erwartungsgemäß positiv, jedoch synergistisch, beeinflusst. Des Weiteren wurde überraschenderweise eine signifikante Verbesserung der Tieftemperaturflexibilität beobachtet.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Die Kautschukmischung enthält erfindungsgemäß 80 bis 100 phr, bevorzugt 90 bis 100 phr, wenigstens eines Kautschuks, welcher ausgewählt ist aus der Gruppe bestehend aus natürlichem Polyisopren (NR), synthetischem Polyisopren (IR), Polybutadienkautschuk (BR), Styrolbutadienkautschuk (SBR), lösungspolymerisierter Styrolbutadienkautschuk (SSBR) und emulsionspolymerisierter Styrolbutadienkautschuk (ESBR).
Besonders gute Ergebnisse lassen sich erzielen, wenn die Kautschukmischung wenigstens einen lösungspolymerisierter Styrolbutadienkautschuk enthält. Hier hat sich eine Menge von 100 phr SSBR als besonders vorteilhaft gezeigt.

Die genannten Kautschuke, insbesondere der lösungspolymerisierte Styrolbutadienkautschuk, können mit Hydroxylgruppen und / oder Epoxygruppen und / oder Siloxangruppen und / oder Aminogruppen und / oder Aminosiloxan und / oder Carboxylgruppen und / oder Phtalocyaningruppen modifiziert sein. Es kommen aber auch weitere, der fachkundigen Person bekannte, Modifizierungen, auch als Funktionalisierungen bezeichnet, in Frage. Ebenfalls können die genannten Kautschuke teilweise oder vollständig hydriert sein.

Des Weiteren kann die erfindungsgemäße Kautschukmischung noch wenigstens einen weiteren polaren oder unpolaren Kautschuk in Mengen von 0 bis 20 phr, bevorzugt in Mengen von 0 bis 10 phr, wenigstens aber 0,1 phr, insbesondere wenigstens 0,5 phr, enthalten.
Der polare oder unpolare Kautschuk ist dabei ausgewählt aus der Gruppe, bestehend aus Flüssigkautschuken und / oder Halobutylkautschuk und / oder Polynorbornen und / oder Isopren-Isobutylen-Copolymer und / oder Ethylen-Propylen-Dien-Kautschuk und / oder Nitrilkautschuk und / oder Chloroprenkautschuk und / oder Acrylat-Kautschuk und / oder Fluorkautschuk und / oder Silikon-Kautschuk und / oder Epichlorhydrinkautschuk und / oder Styrol-Isopren-Butadien-Terpolymer und / oder hydrierter Acrylnitrilbutadienkautschuk und / oder Isopren-Butadien-Copolymer und / oder hydrierter Styrolbutadienkautschuk.
Insbesondere Nitrilkautschuk, hydrierter Acrylnitrilbutadienkautschuk, Chloroprenkautschuk, Butylkautschuk, Halobutylkautschuk oder Ethylen-Propylen-Dien-Kautschuk kommen bei der Herstellung von technischen Gummiartikeln, wie Gurte, Riemen und Schläuche, zum Einsatz.

Es können in der Kautschukmischung noch 0 bis 100 phr, bevorzugt 0 bis 80 phr, besonders bevorzugt 0 bis 50 phr, wenigstens aber 0,1 phr, insbesondere wenigstens 0,5 phr, zumindest eines Weichmachers vorhanden sein.
Dieser Weichmacher ist ausgewählt aus der Gruppe, bestehend aus Mineralölen und / oder synthetischen Weichmachern und / oder Faktisse und / oder Glyceriden und / oder Fettsäuren und / oder Fettsäurederivaten und / oder Terpenen und / oder flüssige Polymere mit einem Molekulargewicht M_{w} zwischen 200 und 15000 g / mol und / oder Saatenöle und / oder BiomassToLiquid- (BTL-)Öle und / oder RubberToLiquid- (RTL-)Öle.

Die Verwendung von Mineralölen hat sich als besonders vorteilhaft herausgestellt. Bei der Verwendung von Mineralöl als Weichmacher ist dieses bevorzugt ausgewählt aus der Gruppe, bestehend aus DAE (Destillated Aromatic Extracts) und / oder RAE (Residual Aromatic Extract) und / oder TDAE (Treated Destillated Aromatic Extracts) und / oder MES (Mild Extracted Solvents) und / oder naphtenische Öle.
Als Saatenöle kommen beispielsweise Rapsöl und /oder Sonnenblumenöl in Frage.

Erfingdungsgemäß enthält die Kautschukmischung 50 bis 250 phr, bevorzugt 80 bis 200 phr, besonders bevorzugt 80 bis 150 phr, Kieselsäure.
Es können dabei alle der fachkundigen Person bekannten Kieselsäuretypen verwendet werden.
Die in der Reifenindustrie eingesetzten Kieselsäuren sind in der Regel gefällte Kieselsäuren, die insbesondere nach ihrer Oberfläche charakterisiert werden. Zur Charakterisierung werden dabei die Stickstoff-Oberfläche (BET) gemäß DIN 66131 und DIN 66132 als Maß für die innere und äußere Füllstoffoberfläche in m²/g und die CTAB-Oberfläche gemäß ASTM D 3765 als Maß für die äußere Oberfläche, die oftmals als die kautschukwirksame Oberfläche angesehen wird, in m²/g angegeben.
Vorteilhafterweise werden so genannte hochdisperse Kieselsäuren mit einer Stickstoff-Oberfläche größer oder gleich 140 m²/g, bevorzugt zwischen 140 und 450 m²/g, besonders bevorzugt zwischen 145 und 450 m²/g, und einer CTAB-Oberfläche zwischen 130 und 250 m²/g, bevorzugt zwischen 140 und 250 m²/g und besonders bevorzugt zwischen 150 und 250 m²/g, eingesetzt.

Erfindungswesentlich ist, dass die Kautschukmischung eine Kombination aus wenigstens einem Mercaptosilan und 1,6-Bis(hexamethylenthiosulfat)dinatrium-dihydrat enthält. Das Mercaptosilan wird in Mengen von 0,1 bis 40 phr, bevorzugt 1 bis 30 phr, besonders bevorzugt 1,5 bis 15 phr, ganz besonders bevorzugt 2 bis 12 phr eingesetzt. Derartige Mercaptosilane sind zum Beispiel unter dem Handelsnamen Si363 von Evonik Industries erhältlich. Es können aber auch die unter den Handelsnamen bekannten NXT-, NXT low VOC- oder NXT-Z-Typen, erhältlich von Momentive Performance Materials inc., verwendet werden.

Bevorzugt wird ein geblocktes Mercaptosilan verwendet. Durch die Verwendung eines geblockten Mercaptosilans ergibt sich ein besonders guter Vorteil hinsichtlich des Rollwiderstandsverhaltens. Ein geblocktes Mercaptosilan ist ein, vorzugsweise durch eine Carbonsäure, an der Mercaptogruppe geschütztes Mercaptosilan.
Es ist möglich, dass noch weitere Silane außer Mercaptosilan in der Kautschukmischung eingesetzt werden. Relevant ist, dass wenigstens ein Mercaptosilan in der Kautschukmischung enthalten sein muss.
Des Weiteren müssen in der Kautschukmischung 0,1 bis 10 phr, bevorzugt 0,1 bis 5 phr, ganz besonders bevorzugt 1 bis 3 phr, 1,6-Bis(hexamethylenthiosulfat)dinatrium-dihydrat (HTS) vorhanden sein. Nur in der Kombination mit HTS und Mercaptosilan zeigt sich der Vorteil hinsichtlich des Abriebverhaltens sehr deutlich.

In einer bevorzugten Ausführungsform enthält die erfindungsgemäße Kautschukmischung zusätzlich wenigstens einen Ruß. Der Ruß wird bevorzugt in Mengen von 0,1 bis 30 phr, bevorzugt in Mengen von 1 bis 25 phr, besonders bevorzugt in Mengen von 5 bis 20 phr verwendet. Hier kommen alle der fachkundigen Person bekannten Ruße in Frage.
In einer besonders bevorzugten Ausführungsform hat der mit einer Iod-Absorptionszahl, gemäß ASTM D 1510, von 50 bis 300 g/kg und einer DPB-Zahl von 40 bis 200 cm³/100 g eingesetzt. Die DBP-Zahl gemäß ASTM D 2414 bestimmt das spezifische Absorptionsvolumen eines Rußes oder eines hellen Füllstoffes mittels Dibutylphthalat. Bevorzugt ist hierbei, wenn lediglich ein Russtyp in der jeweiligen Kautschukmischung verwendet wird, es können aber auch verschiedene Russtypen in die Kautschukmischung eingemischt werden.
Die Verwendung eines solchen Russtyps in der Kautschukmischung, insbesondere für Fahrzeugluftreifen, gewährleistet einen bestmöglichen Kompromiss aus Abriebwiderstand und Wärmeaufbau, der wiederum den ökologisch relevanten Rollwiderstand beeinflusst. Bevorzugt ist hierbei, wenn lediglich ein Russtyp in der jeweiligen Kautschukmischung verwendet wird, es können aber auch verschiedene Russtypen in die Kautschukmischung eingemischt werden.

Weiterhin enthält die Kautschukmischung noch weitere Zusatzstoffe.

Weitere Zusatzstoffe beinhaltet im Wesentlichen das Vernetzungssystem (Vernetzer, Schwefelspendern und / oder elementaren Schwefel, Beschleuniger und Verzögerer), Ozonschutzmittel, Alterungsschutzmittel, Mastikationshilfsmittel und weitere Aktivatoren. Der Mengenanteil der Gesamtmenge an weiteren Zusatzstoffen beträgt 3 bis 150 phr, bevorzugt 3 bis 100 phr und besonders bevorzugt 5 bis 80 phr.
Als Alterungsschutzmittel sind beispielsweise N-Phenyl-N'-(1,3-dimethylbutyl)-p-phenylendiamin (6PPD), N-Isopropyl-N'-phenyl-p-phenylendiamin (IPPD), 2,2,4-Trimenthyl-1,2-dihydrochinolin (TMQ) und andere Substanzen, wie sie beispielsweise aus J. Schnetger, Lexikon der Kautschuktechnik, 2. Auflage, Hüthig Buch Verlag, Heidelberg, 1991, S. 42-48 bekannt sind, zu erwähnen.

Im Gesamtmengenanteil der weiteren Zusatzstoffe finden sich noch 0,1 bis 10 phr, bevorzugt 0,2 bis 8 phr, besonders bevorzugt 0,2 bis 4 phr, Zinkoxid.
Es ist üblich, einer Kautschukmischung für die Schwefelvernetzung mit Vulkanisationsbeschleunigern Zinkoxid als Aktivator meist in Kombination mit Fettsäuren (z. B. Stearinsäure) zuzusetzen. Der Schwefel wird dann durch Komplexbildung für die Vulkanisation aktiviert. Das herkömmlicherweise verwendete Zinkoxid weist dabei in der Regel eine BET-Oberfläche von weniger als 10 m²/g auf. Es kann aber auch so genanntes nano-Zinkoxid mit einer BET-Oberfläche von 10 bis 60 m²/g verwendet werden.

Die Vulkanisation der Kautschukmischung wird vorzugsweise in Anwesenheit von elementarem Schwefel oder Schwefelspendern durchgeführt, wobei einige Schwefelspender zugleich als Vulkanisationsbeschleuniger wirken können. Elementarer Schwefel oder Schwefelspender werden im letzten Mischungsschritt in den gebräuchlichen Mengen (gesamt 0,4 bis 10 phr, wobei elementarer Schwefel bevorzugt in Mengen von 0 bis 6 phr, besonders bevorzugt in Mengen von 0,1 bis 4 phr verwendet wird) der Kautschukmischung zugesetzt. Zur Kontrolle der erforderlichen Zeit und / oder Temperatur der Vulkanisation und zur Verbesserung der Vulkanisateigenschaften kann die Kautschukmischung vulkanisationsbeeinflussende Substanzen wie Vulkanisationsbeschleuniger, Vulkanisationsverzögerer und Vulkanisationsaktivatoren, die in den obig beschriebenen Zusatzstoffen enthalten sind, enthalten.

Vorteilhaft ist es, wenn die erfindungsgemäße Kautschukmischung 0,1 bis 6 phr, bevorzugt 1 bis 5 phr, zumindest eines Vulkanisationsbeschleunigers enthält.
Der Vulkanisationsbeschleuniger ist bevorzugt ausgewählt ist aus der Gruppe der Sulfenamidbeschleuniger und / oder Thiazolbeschleuniger und / oder Thiurambeschleuniger und / oder Mercaptobeschleuniger und / oder Dithiocarbamatbeschleuniger und /oder Aminbeschleuniger und / oder Dithiophosphate und / oder Thioharnstoffe, wobei Sulfenamidbeschleuniger und / oder Guanidinbeschleuniger bevorzugt sind.
Als Sulfenamidbeschleuniger findet bevorzugt N,Tert-Butyl-2-2-Benzothiazolsulfenamid (TBBS) und als Guandidinbeschleuniger bevorzugt Diphenylguanidin (DPG) Verwendung.

Die Herstellung der erfindungsgemäßen Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z.B. durch einen Extrusionsvorgang weiterverarbeitet und in die entsprechende Form gebracht.

Der Erfindung liegt weiterhin die Aufgabe zu Grunde, obig beschriebene Kautschukmischung, zur Herstellung von Reifen, insbesondere zur Herstellung des Laufstreifens eines Reifens und / oder einer Body-Mischung eines Reifens und zur Herstellung von Riemen, Gurten und Schläuchen zu verwenden.
Bei dem Reifen kann es sich um einen LKW-Reifen, einen PKW-Reifen oder um einen Zweiradreifen handeln. Bevorzugt ist allerdings die Verwendung der erfindungsgemäßen Kautschukmischung in einem PKW-Reifen und zwar dort bevorzugt als Kautschukmischung für den Laufstreifen.

Als Body-Mischung eines Reifens werden im Wesentlichen die Kautschukmischungen für Seitenwand, Innenseele, Apex, Gürtel, Schulter, Gürtelprofil, Squeege, Karkasse, Wulstverstärker und / oder Bandage bezeichnet.

Zur Verwendung in Fahrzeugluftreifen wird die Mischung bevorzugt in die Form eines Laufstreifens gebracht und bei der Herstellung des Fahrzeugreifenrohlings wie bekannt aufgebracht. Der Laufstreifen kann aber auch in Form eines schmalen Kautschukmischungsstreifens auf einen Reifenrohling aufgewickelt werden. Ist der Laufstreifen, wie eingangs beschrieben, zweiteilig oder auch mehrteilig, so findet die Kautschukmischung bevorzugt Anwendung als Mischung für die Cap.
Die Herstellung der erfindungsgemäßen Kautschukmischung zur Verwendung als Body-Mischung in Fahrzeugreifen erfolgt wie bereits für den Laufstreifen beschrieben. Der Unterschied liegt in der Formgebung nach dem Extrusionsvorgang. Die so erhaltenen Formen der erfindungsgemäßen Kautschukmischung für eine oder mehrere unterschiedliche Body-Mischungen dienen dann dem Aufbau eines Reifenrohlings.
Zur Verwendung der erfindungsgemäßen Kautschukmischung in Riemen und Gurten, insbesondere in Fördergurten, wird die extrudierte Mischung in die entsprechende Form gebracht und dabei oder nachher häufig mit Festigkeitsträgern, z.B. synthetische Fasern oder Stahlcorde, versehen. Zumeist ergibt sich so ein mehrlagiger Aufbau, bestehend aus einer und / oder mehrerer Lagen Kautschukmischung, einer und / oder mehrerer Lagen gleicher und / oder verschiedener Festigkeitsträger und einer und / oder mehreren weiteren Lagen dergleichen und / oder einer anderen Kautschukmischung.

Zur Verwendung der erfindungsgemäßen Kautschukmischung in Schläuchen wird häufig keine so genannte Schwefelvernetzung, sondern eine peroxidische Vernetzung bevorzugt.
Die Herstellung der Schläuche erfolgt zumeist analog dem im Handbuch der Kautschuktechnologie, Dr. Gupta Verlag, 2001, Kapitel 13.4 beschriebenen Verfahren.

Die Erfindung soll nun anhand von Vergleichs- und Ausführungsbeispielen, die in Tabellen 1 und 2 zusammengefasst sind, näher erläutert werden. Die mit "E" gekennzeichneten Mischungen sind hierbei erfindungsgemäße Mischungen, während es sich bei den mit "V" gekennzeichneten Mischungen um Vergleichsmischungen handelt.

Bei sämtlichen in der Tabelle enthaltenen Mischungsbeispielen sind die angegebenen Mengenangaben Gewichtsteile, die auf 100 Gewichtsteile Gesamtkautschuk bezogen sind (phr).

Die Mischungsherstellung erfolgte unter üblichen Bedingungen in mehreren Stufen in einem Labortangentialmischer. Aus sämtlichen Mischungen wurden Prüfkörper durch Vulkanisation hergestellt und mit diesen Prüfkörpern für die Kautschukindustrie typische Materialeigenschaften bestimmt. Für die obig beschriebenen Tests an Prüfkörpern wurden folgende Testverfahren angewandt:
- Rückprallelastizität bei Raumtemperatur und 70°C gemäß DIN 53 512
- Shore-A-Härte bei Raumtemperatur gemäß DIN 53 505
- Relativer Vernetzungsgrad von 10% (t10, Anvulkanisationszeit) und 90% (t90, Ausvulkanisationszeit) mittels rotorlosem Vulkameter (MDR = Moving Disc Rheometer) gemäß DIN 53 529
- Abrieb bei Raumtemperatur gemäß DIN53 516 bzw. DIN/ISO 4649
- dynamischer Speichermodul E'gemäß DIN 53 513 bei 8% Dehnung
- Zugfestigkeit bei Raumtemperatur gemäß DIN 53 504

**Tabelle 1**

| **Bestandteile** | **Einheit** | **V1** | **V2** | **V3** | **E1** |
|---|---|---|---|---|---|
| SSBR^{a} | phr | 137,5 | 137,5 | 137,5 | 137,5 |
| Kieselsäure^{b} | phr | 95 | 95 | 95 | 95 |
| Ruß^{c} | phr | 20 | 20 | 20 | 20 |
| Silan^{d} | phr | 6,9 | -- | 6,9 | -- |
| Silan^{e} | phr | -- | 9,8 | -- | 9,8 |
| Weichmacher^{f} | phr | 24 | 24 | 24 | 24 |
| ZnO | phr | 4 | 4 | 4 | 4 |
| Alterungsschutzmittel /Ozonschutzmittel / Stearinsäure | phr | 10 | 10 | 10 | 10 |
| HTS^{g} | phr | -- | -- | 1,5 | 1,5 |
| TBBS | phr | 2 | 2 | 2 | 2 |
| TBzTD | phr | 0,5 | 0,5 | 0,5 | 0,5 |
| DPG | phr | 2,1 | 2,1 | 2,1 | 2,1 |
| Schwefel | phr | 1,7 | 1,7 | 1,7 | 1,7 |

| | | | | | |
|---|---|---|---|---|---|
| ^{a} Tufdene™ 3835, mit 37,5 phr Öl verstreckt, Fa. Asahi; ^{b} Zeosil 1165MP, Fa. Rhodia (BET 155 m²/g, CTAB 160 m²/g); ^{c} N121; ^{d} TESPD, Silquest A 1589, Fa. Momentive Performance Materials ^{e} NXT, Fa. Momentive Performance Materials ^{f} Mineralöl, TDAE ^{g} 1,6-Bis(hexamethylenthiosulfat)dinatrium-dihydrat, Duralink HTS (Na-HMT), Fa. Monsanto | | | | | |

**Tabelle 2**

| **Eigenschaften** | **Einheit** | **V1** | **V2** | **V3** | **E1** |
|---|---|---|---|---|---|
| Härte bei RT | Shore A | 64 | 58 | 67 | 64 |
| Rückprall bei RT | % | 12 | 15 | 12 | 14 |
| Rückprall bei 70°C | % | 41 | 48 | 42 | 44 |
| t10 | min | 4,1 | 3,7 | 3 | 2,9 |
| t90 | min | 8,3 | 8 | 7,2 | 8,4 |
| E' bei 55°C, 8% Dehnung | MPa | 4,6 | 3,6 | 4,7 | 4,5 |
| Abrieb | mm³ | 184 | 296 | 203 | 235 |

Aus Tabelle 2 wird ersichtlich, dass sich bei Verwendung eines Mercaptosilans (Vergleich von V1 zu V2) das Abriebverhalten deutlich verschlechtert, das Rollwiderstandsverhalten, dargestellt durch die Rückprallelastizität bei 70°C, verbessert wird. Darüber hinaus verschlechtert sich die dynamische Steifigkeit bei 55°C, ein Indikator für die Handlingstabilität, signifikant. Wird in einer Kautschukmischung ohne Mercaptosilan zusätzlich HTS (Vergleich V1 zu V3) verwendet, so wird das Abriebverhalten nur geringfügig negativ belastet, während das Rollwiderstandsverhalten auf annähernd gleichem Niveau verbleibt und die Handlingstabilität erwartungsgemäß verbessert wird. Überraschenderweise zeigt eine Kombination aus Mercaptosilan und HTS (siehe E1) ein Abriebsverhalten, welches deutlich geringer ist, als es mathematisch anhand der Einzelmaßnahmen (V2 und V3) zu erwarten gewesen ist, gleichzeitig ergibt sich ein optimiertes Rollwiderstandsverhalten und eine stabile Handlingeigenschaft.
Des Weiteren lässt sich erkennen, dass die Kombination aus Mercaptosilan und HTS einen positiven Einfluss auf das Vulkanisationsverhalten (siehe t10 und t90) zeigt: Das Anvulkanisationsverhalten t10 wird gegenüber der Referenzmischung V1 beschleunigt, das Ausvulkanisationsverhalten t90 konstant gehalten. Die Zeit für die Netzwerkbildung wird demgemäß verlängert, das Netzwerk folglich vergleichmäßigt.

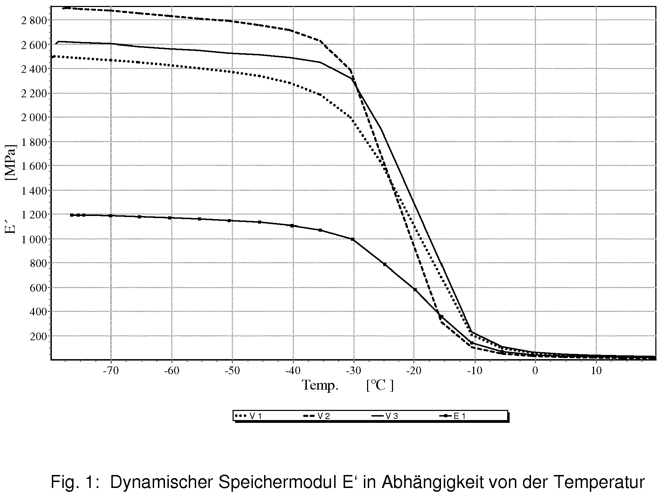

Figur 1 zeigt eine Darstellung des dynamischen Speichermoduls E' in Abhängigkeit von der Temperatur. Anhand der Darstellung ist zu erkennen, dass die Kautschukmischung V2 bei niedrigeren Temperaturen als die Referenzmischungen verglast, wobei der Verglasungsprozess jedoch schneller durchlaufen wird. Dies bedeutet, dass die Tieftemperaturflexibilität von V2 bis etwa 23°C besser ist als die von V1. Die Verglasung bei der Kautschukmischung V3 tritt bei derselben Temperatur wie für V1 ein, verläuft jedoch ebenfalls schneller. Die erfindungsgemäße Mischung E1 zeigt überraschenderweise ein synergistisches Verhalten. Die Verglasung verläuft deutlich verlangsamt, während die Steifigkeitszunahme darüber hinaus signifikant geringer im Vergleich zu den Referenzmischungen ist. Dies bedeutet, dass die erfindungsgemäße Mischung ein erweitertes Temperaturspektrum besitzt und dadurch überraschenderweise sowohl für UHP-Reifen als auch für herkömmliche Fahrzeugluftreifen geeignet ist.

## Patentansprüche

1. Kautschukmischung, **gekennzeichnet durch** folgende Zusammensetzung:
- 80 bis 100 phr wenigstens eines Kautschuks, welcher ausgewählt ist aus der Gruppe bestehend aus natürlichem Polyisopren (NR), synthetischem Polyisopren (IR), Polybutadienkautschuk (BR), Styrolbutadienkautschuk (SBR), lösungspolymerisierter Styrolbutadienkautschuk (SSBR) und emulsionspolymerisierter Styrolbutadienkautschuk (ESBR) und
- 50 bis 250 phr zumindest einer Kieselsäure und
- 0,1 bis 40 phr zumindest eines Mercaptosilans und
- 0,1 bis 10 phr 1,6-Bis(hexamethylenthiosulfat)dinatrium-dihydrat und
- weitere Zusatzstoffe.

2. Kautschukmischung nach Anspruch 1, **dadurch gekennzeichnet, dass** der Kautschuk ein lösungspolymerisierter Styrolbutadienkautschuk (SSBR) ist.

3. Kautschukmischung nach Anspruch 1 oder 2, **dadurch gekennzeichnet, dass** 100 phr eines lösungspolymerisierten Styrolbutadienkautschuks (SSBR) enthält.

4. Kautschukmischung nach einem der Ansprüche 1 bis 3, **dadurch gekennzeichnet, dass** das Mercaptosilan ein geblocktes Mercaptosilan ist.

5. Kautschukmischung nach einem der Ansprüche 1 bis 4, **dadurch gekennzeichnet, dass** die Kieselsäure eine BET-Oberfläche zwischen 145 m²/g und 450 m²/g und eine CTAB-Oberfläche zwischen 150 m²/g und 250 m²/g hat.

6. Kautschukmischung nach einem der Ansprüche 1 bis 5, **dadurch gekennzeichnet, dass** sie zusätzlich wenigstens einen Ruß enthält.

7. Kautschukmischung nach einem der Ansprüche 1 bis 6, **dadurch gekennzeichnet, dass** sie zusätzlich wenigstens einen Weichmacher enthält.

8. Kautschukmischung nach Anspruch 7, **dadurch gekennzeichnet, dass** der Weichmacher ein Mineralöl ist.

9. Verwendung einer Kautschukmischung nach einem der Ansprüche 1 bis 8 zur Herstellung eines Reifens.

10. Verwendung einer Kautschukmischung nach Anspruch 9 zur Herstellung eines Laufstreifens und / oder einer Body-Mischung eines Reifens.

## Claims

1. Rubber mixture, **characterized by** the following composition:
- from 80 to 100 phr of at least one rubber selected from the group consisting of natural polyisoprene (NR), synthetic polyisoprene (IR), polybutadiene rubber (BR), styrene-butadiene rubber (SBR), solution-polymerized styrene-butadiene rubber (SSBR) and emulsion-polymerized styrene-butadiene rubber (ESBR) and
- from 50 to 250 phr of at least one silica and
- from 0.1 to 40 phr of at least one mercaptosilane and
- from 0.1 to 10 phr of hexamethylene 1,6-bis(thiosulphate), disodium salt, dihydrate and
- other additional substances.

2. Rubber mixture according to Claim 1, **characterized in that** the rubber is a solution-polymerized styrene-butadiene rubber (SSBR).

3. Rubber mixture according to Claim 1 or 2, **characterized in that** it comprises 100 phr of a solution-polymerized styrene-butadiene rubber (SSBR).

4. Rubber mixture according to any of Claims 1 to 3, **characterized in that** the mercaptosilane is a blocked mercaptosilane.

5. Rubber mixture according to any of Claims 1 to 4, **characterized in that** the BET surface area of the silica is from 145 m²/g to 450 m²/g, and its CTAB surface area is from 150 m²/g to 250 m²/g.

6. Rubber mixture according to any of Claims 1 to 5, **characterized in that** it also comprises at least one carbon black.

7. Rubber mixture according to any of Claims 1 to 6, **characterized in that** it also comprises at least one plasticizer.

8. Rubber mixture according to Claim 7, **characterized in that** the plasticizer is a mineral oil.

9. Use of a rubber mixture according to any of Claims 1 to 8 for the production of a tyre.

10. Use of a rubber mixture according to Claim 9 for the production of a tread and/or of a body mixture of a tyre.

## Revendications

1. Mélange de caoutchouc, **caractérisé par** la composition suivante :
- 80 à 100 pce d'au moins un caoutchouc, qui est choisi dans le groupe constitué par le polyisoprène naturel (NR), le polyisoprène synthétique (IR), le caoutchouc de polybutadiène (BR), le caoutchouc de styrène-butadiène (SBR), le caoutchouc de styrène-butadiène polymérisé en solution (SSBR) et le caoutchouc de styrène-butadiène polymérisé en émulsion (ESBR), et
- 50 à 250 pce d'au moins une silice, et
- 0,1 à 40 pce d'au moins un mercaptosilane, et
- 0,1 à 10 pce de dihydrate de 1,6-bis(thiosulfate d'hexaméthylène)disodium, et
- des additifs supplémentaires.

2. Mélange de caoutchouc selon la revendication 1, **caractérisé en ce que** le caoutchouc est le caoutchouc de styrène-butadiène polymérisé en solution (SSBR).

3. Mélange de caoutchouc selon la revendication 1 ou 2, **caractérisé en ce qu'**il contient 100 pce d'un caoutchouc de styrène-butadiène polymérisé en solution (SSBR).

4. Mélange de caoutchouc selon l'une quelconque des revendications 1 à 3, **caractérisé en ce que** le mercaptosilane est un mercaptosilane bloqué.

5. Mélange de caoutchouc selon l'une quelconque des revendications 1 à 4, **caractérisé en ce que** la silice a une surface BET comprise entre 145 m²/g et 450 m²/g et une surface CTAB comprise entre 150 m²/g et 250 m²/g.

6. Mélange de caoutchouc selon l'une quelconque des revendications 1 à 5, **caractérisé en ce qu'**il contient en outre au moins un noir de carbone.

7. Mélange de caoutchouc selon l'une quelconque des revendications 1 à 6, **caractérisé en ce qu'**il contient en outre au moins un plastifiant.

8. Mélange de caoutchouc selon la revendication 7, **caractérisé en ce que** le plastifiant est une huile minérale.

9. Utilisation d'un mélange de caoutchouc selon l'une quelconque des revendications 1 à 8 pour la fabrication d'un pneu.

10. Utilisation d'un mélange de caoutchouc selon la revendication 9 pour la fabrication d'une bande de roulement et/ou d'un mélange de corps d'un pneu.
